# FASCICULE DE BREVET EUROPEEN

(11) **EP 4 064 495 B1**
(45) Date de publication et mention de la délivrance du brevet: **27.09.2023**
(21) Numéro de dépôt: 22163614.5
(22) Date de dépôt: 22.03.2022
(51) Int. Cl.: H02J 3/00, H02J 3/18, H01F 27/42, H01F 30/06

(54) **COMPENSATEUR SYNCHRONE STATIQUE SÉRIE MOYENNE TENSION POUR RÉSEAU ÉLECTRIQUE DE DISTRIBUTION ET PROCÉDÉ DE COMMANDE**
STATISCHER SYNCHRONER MITTELSPANNUNG-SERIENKOMPENSATOR FÜR ELEKTRISCHES STROMVERTEILUNGSNETZ UND STEUERUNGSVERFAHREN
MEDIUM-VOLTAGE SERIES STATIC SYNCHRONOUS COMPENSATOR FOR ELECTRICAL DISTRIBUTION NETWORK AND CONTROL METHOD

(30) Priorité: 23.03.2021 FR 2102915
(43) Date de publication de la demande: 28.09.2022
(73) Titulaire: Electricité de France, 75008 Paris (FR)
(72) Inventeur: GEORGE, Benoit, 91300 MASSY (FR); GARRY, Aurel, 91300 MASSY (FR); SWAMINATHAN, BHARGAV, 75014 PARIS (FR)
(74) Mandataire: Regimbeau

(56) Documents cités:
- CN-U- 206 992 701
- NGAMROO I: "Application of static synchronous series compensator (SSSC) to stabilization of frequency oscillations in an interconnected power system", CONFERENCE PROCEEDINGS / ISCAS 2001, THE 2001 IEEE INTERNATIONAL SYMPOSIUM ON CIRCUITS AND SYSTEMS : 06 - 09 MAY 2001, SYDNEY CONVENTION AND EXHIBITION CENTRE, DARLING HARBOUR, SYDNEY, AUSTRALIA, IEEE SERVICE CENTER, PISCATAWAY, NJ, vol. 3, 6 mai 2001 (2001-05-06), pages 113-116, XP010541089, DOI: 10.1109/ISCAS.2001.921259 ISBN: 978-0-7803-6685-5
- KALYAN K SEN: "SSSC - Static Synchronous Series Compensator: Theory, Modeling, and Applications", IEEE TRANSACTIONS ON POWER DELIVERY, IEEE SERVICE CENTER, NEW YORK, NY, US, vol. 13, no. 1, 1 janvier 1998 (1998-01-01), pages 241-246, XP011089071, ISSN: 0885-8977
- DUANGKAMOL K ET AL: "Fault current limiting and power system stabilization by static synchronous series compensator", POWER SYSTEM TECHNOLOGY, 2000. PROCEEDINGS. POWERCON 2000. INTERNATION AL CONFERENCE ON 4-7 DECEMBER 2000, PISCATAWAY, NJ, USA,IEEE, vol. 3, 4 décembre 2000 (2000-12-04), pages 1581-1586, XP010528843, ISBN: 978-0-7803-6338-0
- ZHAO JIANJUN ET AL: "Modeling of static synchronous series compensator in Newton power flow calculation in PSASP", TRANSMISSION AND DISTRIBUTION CONFERENCE AND EXHIBITION: ASIA AND PACI FIC, 2005 IEEE/PES DALIAN, CHINA 15-18 AUG. 2005, PISCATAWAY, NJ, USA,IEEE, PISCATAWAY, NJ, USA, 15 août 2005 (2005-08-15), pages 1-5, XP010885918, ISBN: 978-0-7803-9114-7

## Description

### DOMAINE DE L'INVENTION

Le domaine de l'invention est celui de la gestion des réseaux électriques de distribution.

### ETAT DE LA TECHNIQUE

Les réseaux de distribution moyenne tension sont généralement exploités de façon radiale avec des points de reprises entre postes sources pour réalimenter rapidement des clients coupés suite à l'indisponibilité du schéma d'alimentation initial. Ces points de reprises sont normalement ouverts pour ne pas perturber le plan de protection et éviter de détecter les défauts réseaux sur deux départs de distributions différents.

Boucler / coupler les réseaux offre cependant beaucoup d'avantages technico-économiques en fonctionnement normal : meilleure fiabilité, qualité de service de fourniture d'électricité accrue etc. Mais les systèmes de protection contre les défauts de ces réseaux ont des besoins beaucoup plus sophistiqués et sont par conséquent coûteux.

Des solutions de réseaux de distributions maillés peuvent être développées en s'inspirant directement du réseau de transport (qui est en haute tension), mais elles demandent une surveillance et une gestion des flux complexes et des investissements lourds.

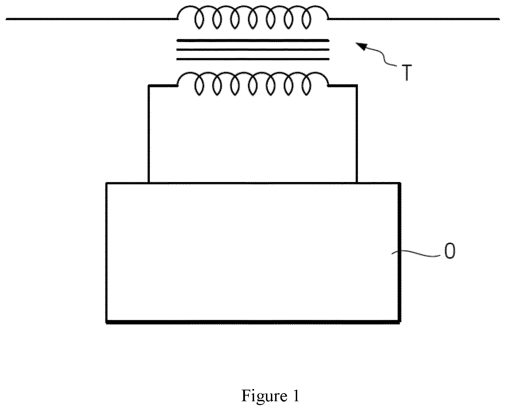

Une de ces solutions connues pour les réseaux électriques de transport consiste à intégrer des FACTS (Flexible Alternating Current Transmission System) ou « système de transmission flexible en courant AC ». Ces derniers comprennent des SSSC (Static Synchronous Serie Compensator) ou « Compensateur synchrone statique série » qui sont constitués comme illustré sur la figure 1 annexée d'un onduleur triphasé O, autrement dit une source de tension, couplé en série avec la ligne électrique à l'aide d'un transformateur T triphasé. Les SSSC connus sont implémentés de façon ponctuelle sur les réseaux de transport pour, entre autres, gérer les flux. Ils sont néanmoins dimensionnés en transport (i.e. en haute tension) pour tenir les défauts réseaux et/ou conserver la liaison en cas de défaut ce qui requiert une taille importante. En effet, les équipements d'électronique de puissance nécessaires pour résister à des défauts en haute tension sont particulièrement encombrants et onéreux.

De tels dispositifs sont décrits par exemple dans les documents :
. IEEE-SSSC-static synchronous series compensator: theory, modeling and application, Jan 1998 - K.K. Sen,
. IJAREEIE Static Synchronous Series Compensator for Series Compensation of EHV Transmission Line, July 7, 2013,
. Proposed terms and définitions for flexible AC transmission system (FACTS) IEEE Transactions on Power Delivery Volume 12, Issue 4, October 1997,
. Narain et al Understanding FACTS: Concepts and Technology of Flexible AC Transmission Systems Wiley-IEEE Press Dec 1999,
. Xiao-Ping Zhang et al Flexible AC Transmission Systems: Modeling and Control - Springer Feb 2012 et
. CIGREE 51 - Load Flow Control in High Voltage Power System Using FACTS Controllers - Jan 1996 Task Force 38.01.06,
ainsi que dans les nombreux articles auxquels font référence les documents cités ci-dessus.

Le document suivant décrit également un compensateur synchrone statique série:
. NGAMROO I: "Application of static synchronous series compensator (SSSC) to stabilization of frequency oscillations in an interconnected power system", ISCAS 2001, Volume 3, Issue 6 mai 2001.

D'autres dispositifs de couplage comme des « smart transformers », des convertisseurs AC/DC/AC (« Static Frequency Converter ») ou des dispositifs de limitations de court-circuit actifs existent en moyenne tension pour apporter de la contrôlabilité. Mais ils ont des désavantages :
- soit ils sont dimensionnés pour transférer la pleine puissance transitée entre les réseaux,
- soit ils ne gèrent pas le transfert de flux entre les réseaux interconnectés,
- soit ils n'ont pas un pouvoir de limitation des courants de défauts assez rapides (< quelques ms) pour éviter la détection de défauts sur le réseau sain provenant de l'autre réseau interconnecté en défaut.

En conclusion les dispositifs jusqu'ici proposés pour assurer le couplage de réseaux électriques, notamment les dispositifs de type SSSC conçus pour les réseaux de transport, ne sont pas adaptés pour un couplage optimal de réseaux de distribution.

Dans ce contexte, il existe un important besoin pour des dispositifs permettant de boucler des réseaux de distribution, ou pouvant être laissés ouverts, dans les deux cas en fonctionnement normal tout en garantissant une sécurité optimale, notamment quant à la limitation de la propagation des défauts, et sans nécessiter de modifier les réseaux ou leurs plans de protection.

### EXPOSE DE L'INVENTION

L'invention porte sur un compensateur synchrone statique série moyenne tension (SSSC MV - Static Synchronous Series Compensator MV) possédant une fonction de protection et découplage rapide de réseaux.

L'invention a notamment pour objectif de proposer un compensateur adapté pour limiter des courants de court-circuit et bloquer rapidement des défauts pour ne pas perturber le schéma de protection de chaque réseau.

L'invention a également pour objectif de proposer un compensateur configuré pour réagir rapidement lors de l'apparition d'un défaut et limiter des courants de défaut suffisamment rapidement pour qu'un défaut sur un réseau ne soit pas détecté par le système de protection de l'autre réseau et n'entraine pas son déclenchement.

Plus particulièrement, l'invention porte sur un compensateur synchrone statique série moyenne tension adapté pour connecter électriquement deux réseaux électriques de distribution ou pour connecter deux portions d'un même réseau électrique de distribution, comprenant un transformateur de ligne et un onduleur basse tension, l'onduleur basse tension étant électriquement connecté au transformateur de ligne, le transformateur de ligne présentant deux points de couplage chacun adapté pour être relié à un des deux réseaux électriques ou à une des deux portions d'un même réseau électrique de distribution, et le transformateur de ligne comprenant un circuit magnétique primaire et un circuit magnétique secondaire. De plus, le transformateur comprend un circuit de dérivation reliant magnétiquement le primaire et le secondaire pour permettre à rendre indépendant le comportement du circuit magnétique secondaire du comportement du circuit magnétique primaire en cas d'application sur le circuit magnétique primaire de la tension d'un réseau après un blocage sur réseau triphasé de l'onduleur.

Le primaire et le secondaire peuvent présenter chacun au moins un bobinage, ledit au moins un bobinage primaire et ledit au moins un bobinage secondaire étant décalés longitudinalement de sorte à ne pas être concentriques.

Le circuit de dérivation peut comprendre un circuit magnétique tertiaire.

Le circuit de dérivation peut comprendre un organe de coupure mobile entre une position fermée dans laquelle le circuit magnétique tertiaire est court-circuité et une position ouverte dans laquelle un courant électrique peut circuler dans le tertiaire.

Le transformateur peut être est adapté pour présenter une saturation maîtrisée à partir d'une tension de l'ordre du double d'une tension nominale de l'onduleur.

Le transformateur peut être adapté pour présenter une saturation maîtrisée à partir d'une tension de l'ordre de 1000V.

Le transformateur peut être adapté pour présenter à l'état de saturation maitrisée une inductance magnétisante saturée maîtrisée équivalente pour le circuit magnétique primaire au moins supérieure à 1/20 de l'inductance magnétique non saturée du transformateur.

Le transformateur peut être adapté pour présenter à l'état de saturation maitrisée une inductance magnétisante saturée maîtrisée équivalente pour le circuit magnétique primaire supérieure à 100mH.

Le compensateur synchrone statique série moyenne tension peut comprendre au moins un contacteur adapté pour séparer les deux réseaux électriques en cas de défaut sur l'un d'eux.

Au moins l'un des points de couplage peut comprendre un contacteur adapté pour séparer les deux réseaux électriques ou les deux portions d'un même réseau électrique de distribution en cas de défaut sur l'un d'eux.

Le compensateur synchrone statique série moyenne tension peut comprendre deux contacteurs placés respectivement au niveau des points de couplage, adaptés pour séparer les deux réseaux électriques en cas de défaut sur l'un d'eux et isoler le compensateur.

Le compensateur synchrone statique série moyenne tension peut comprendre un contacteur de contournement parallèle.

L'onduleur peut être adapté pour générer une tension, pour définir l'orientation d'une circulation électrique entre les deux points de couplage.

Le transformateur peut comprendre un noyau non bobiné de retour de flux en parallèle des noyaux bobinés pour conserver une inductance magnétisante homopolaire de l'ordre de l'inductance magnétisante équilibrée / 3.

Le transformateur peut comprendre au moins quatre colonnes.

Selon un deuxième aspect, l'invention concerne un ensemble de réseau électrique comprenant deux portions d'un même un réseau électrique de distribution, par exemple deux départs d'un même poste, ou deux réseaux électriques de distribution électrique, par exemple deux réseaux reliés à deux postes sources respectifs, reliés par un compensateur synchrone statique série moyenne tension selon l'invention.

Selon un troisième aspect, l'invention concerne un procédé de commande d'un compensateur synchrone statique série moyenne tension selon l'invention, comprenant les étapes suivantes :
(a) réception d'un ordre de circulation d'un signal électrique d'un premier point de couplage vers un second point de couplage ;
(b) génération par l'onduleur d'une basse tension pour orienter la circulation du signal électrique conformément à l'ordre reçu.

Le procédé comprend en outre l'étape suivante :
(c) lors de la détection d'un signal électrique indiquant un défaut provenant d'un premier réseau de distribution, protection du second réseau de distribution en bloquant l'onduleur et entrainant si nécessaire le transformateur dans un état de saturation maitrisée.

L'étape (b) peut comprendre la génération d'une basse tension inférieure à 1kV, préférentiellement de l'ordre de 500V.

L'étape (c) peut comprendre les étapes suivantes :
(c1) détection d'un courant de défaut ;
(c3) blocage de l'onduleur et limitation du courant de défaut par le transformateur série dans un état de saturation maitrisée ;
(c4) ouverture d'un contacteur relié au réseau n'étant pas en défaut ;
(c5) transmission d'informations d'état et de détection du défaut à un organe de contrôle du réseau en défaut.

L"étape (c) peut comprendre en outre l'étape suivante : (c2) détermination du réseau à l'origine du défaut.

Le circuit de dérivation peut comprendre un organe de coupure mobile entre une position fermée dans laquelle le tertiaire est court-circuité et une position ouverte dans laquelle un courant électrique peut circuler dans le tertiaire, et l'étape (c3) peut comprendre en outre le passage en position ouverte de l'organe de coupure.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 précédemment décrite représente schématiquement un compensateur connu de l'état de la technique,
La figure 2 est un schéma d'un compensateur synchrone statique série moyenne tension selon l'invention ;
La figure 3 est un schéma équivalent du compensateur synchrone statique série moyenne tension selon l'invention illustré sur la figure 2 ;
La figure 4 est un schéma de principe d'un transformateur selon l'invention ;

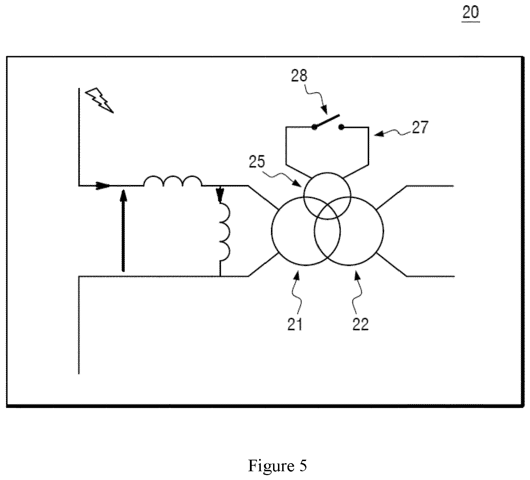

La figure 5 est un schéma de principe d'un transformateur selon l'invention, lors de la détection d'un défaut ;
La figure 6 représente schématiquement une tension en quadrature ajoutée par le compensateur aux tensions des réseaux couplés ;
La figure 7 représente une variante de compensateur synchrone statique série moyenne tension conforme à la présente invention, comportant un contacteur de bypass ;
La figure 8 est un schéma d'un ensemble de réseaux électriques comprenant un compensateur synchrone statique série moyenne tension selon l'invention configuré pour coupler deux départs d'un poste source ;
La figure 9 est un schéma d'un autre ensemble de réseaux électriques comprenant un compensateur synchrone statique série moyenne tension selon l'invention configuré pour coupler des réseaux provenant de deux postes sources ;
La figure 10 représente schématiquement un transformateur à trois colonnes avec une colonne formant un circuit magnétique de dérivation, utilisé selon un mode de réalisation de la présente invention ;
La figure 11 représente schématiquement un transformateur monophasé à trois colonnes avec une colonne intermédiaire formant un circuit de dérivation comprenant un circuit magnétique tertiaire utilisé selon un mode de réalisation de la présente invention ;
La figure 12 représente schématiquement un transformateur à quatre colonnes avec une culasse intermédiaire formant un circuit magnétique de dérivation, utilisé selon un mode de réalisation de la présente invention ;
La figure 13 représente un transformateur fonctionnellement équivalent composé de deux noyaux magnétiques triphasés, un premier noyau magnétique ayant une fonction de transformateur série saturable et un deuxième noyau ayant une fonction de circuit magnétique tertiaire.
La figure 14 est un schéma représentant un défaut triphasé sur un ensemble de réseaux électriques comprenant un compensateur synchrone statique série moyenne tension selon l'invention ;
La figure 15 représente schématiquement une deuxième étape consécutive à l'apparition d'un défaut triphasé ;
La figure 16 représente schématiquement une troisième étape consécutive à l'apparition d'un défaut triphasé ;
La figure 17 représente schématiquement une quatrième étape consécutive à l'apparition d'un défaut triphasé ;
La figure 18 représente schématiquement une cinquième étape consécutive à l'apparition d'un défaut triphasé ;
La figure 19 est un schéma illustrant la connexion d'un transformateur à quatre colonnes dans le cadre de la présente invention ; et
La figure 20 est un schéma homopolaire équivalent ;
La figure 21 est un schéma représentant un défaut monophasé à la terre sur un ensemble de réseaux électriques comprenant un compensateur synchrone statique série moyenne tension selon l'invention ;
La figure 22 représente schématiquement une deuxième étape consécutive à l'apparition d'un défaut monophasé à la terre ;
La figure 23 représente schématiquement une troisième étape consécutive à l'apparition d'un défaut monophasé à la terre.

Sur l'ensemble des figures, les éléments similaires portent des références identiques.

### DESCRIPTION DETAILLEE DE L'INVENTION

### Compensateur synchrone statique série moyenne tension

Selon un premier aspect, l'invention concerne un compensateur synchrone statique série moyenne tension 1 adapté pour connecter électriquement deux réseaux électriques A, B de distribution ou pour connecter deux portions d'un même réseau électrique, par exemple des départs d'un même poste ou de postes différents.

Par réseau électrique de distribution, il est entendu un réseau électrique A, B moyenne tension pouvant comprendre plusieurs générateurs et plusieurs consommateurs de courant électrique.

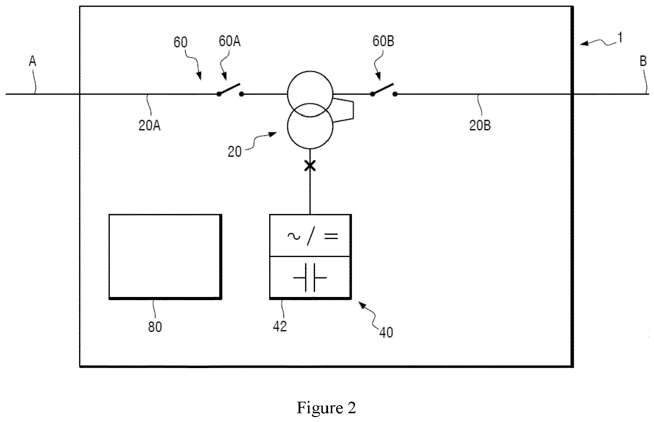

Le compensateur synchrone statique série moyenne tension 1 comprend notamment comme illustré sur la figure 2 un transformateur 20 de ligne triphasé et un onduleur 40 basse tension dont les caractéristiques respectives seront détaillées ci-après.

Par convention on considère le réseau HTA comme étant le primaire.

Comme indiqué précédemment le transformateur 20 conforme à l'invention est configuré pour présenter une saturation maitrisée en cas de défaut sur l'un des réseaux. Cette disposition sera précisée par la suite.

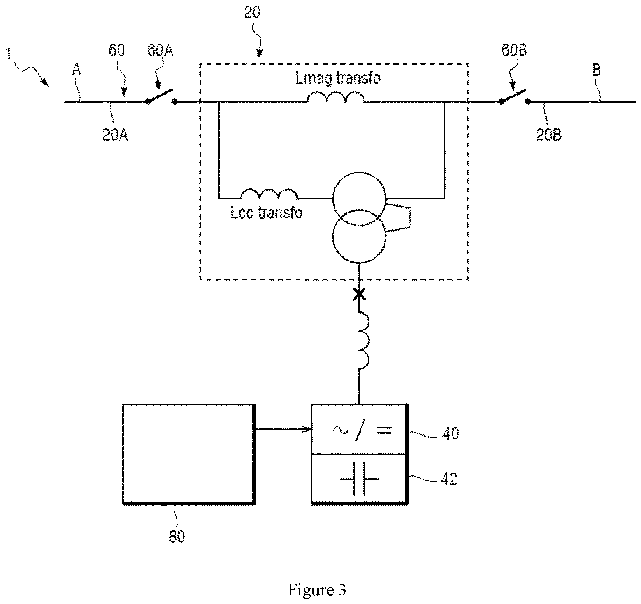

La figure 3 représente un schéma équivalent du transformateur sur lequel on voit l'inductance de magnétisation Lmag en série entre les deux points de sortie du primaire et l'inductance de court-circuit Lcc du transformateur.

En outre, le compensateur synchrone statique série moyenne tension 1 comprend des moyens 60 de protection (formés de moyens de coupure de courant nominal), à base de contacteurs, contre la propagation de défauts entre les deux réseaux électriques A, B. Ainsi le compensateur synchrone statique série moyenne tension 1 selon l'invention permet de sécuriser une liaison entre deux réseaux électriques A, B de distribution. En l'absence de défaut sur les réseaux couplés, le compensateur synchrone statique série moyenne tension 1 selon l'invention permet d'avoir une circulation électrique entre les réseaux électriques A, B pour par exemple équilibrer la production et la consommation entre les réseaux. En cas de défaut, tel que cela sera décrit ci-après, le compensateur synchrone statique série moyenne tension 1, permet de couper la liaison entre les réseaux électriques A, B, de sorte qu'un réseau en défaut est pratiquement instantanément confiné, ce qui évite la propagation du défaut à l'autre réseau ou plus précisément la contribution de l'autre réseau à ce défaut.

Par ailleurs le compensateur synchrone statique série moyenne tension 1 comprend un module 80 de contrôle de l'onduleur 40 et des contacteurs 60. Le module 80 assure notamment l'ensemble des communications entre les capteurs de défaut, l'onduleur 40 et les contacteurs 60.

### Transformateur de ligne

Le transformateur de ligne triphasé peut faire l'objet de tous modes de réalisation permettant une saturation maîtrisée lorsqu'il est soumis à une tension supérieure à un seuil résultant d'un défaut.

Tel que cela sera détaillé ci-après, par « saturation maitrisée », il est entendu que la structure du transformateur selon l'invention permet en cas de défaut réseau et d'application d'une tension élevée au niveau du circuit magnétique primaire du transformateur, de rendre indépendant le comportement du circuit magnétique secondaire du comportement du circuit magnétique primaire.

Ainsi, tel que cela sera développé, le comportement magnétique du transformateur, en cas de tension élevée aux bornes du primaire est équivalent pour le secondaire à une saturation du noyau magnétique.

Le transformateur 20 comprend principalement un circuit magnétique primaire 21, un circuit magnétique secondaire 22, et un circuit de dérivation 27 reliant magnétiquement le circuit magnétique primaire 21 et le circuit magnétique secondaire 22 pour permettre de différencier le comportement du circuit magnétique secondaire 22 du comportement du circuit magnétique primaire 21 en cas d'application au niveau du circuit magnétique primaire 21 de la tension d'un réseau après le blocage sur réseau triphasé de l'onduleur 40.

Tel que cela sera développé ci-après, le circuit magnétique primaire 21 et le circuit magnétique secondaire 22 présentent chacun au moins un bobinage.

En outre, le circuit de dérivation 27 peut comprendre un circuit magnétique tertiaire 25. Le circuit magnétique tertiaire 25 est une disposition technique particulièrement avantageuse de l'invention. En effet, le circuit magnétique tertiaire 25 permet d'éviter les fuites magnétiques sur le circuit de dérivation 27. De plus, le circuit de dérivation 27 comprend un organe de coupure 28 mobile entre une position fermée dans laquelle le circuit magnétique tertiaire 25 est court-circuité et une position ouverte dans laquelle un flux magnétique peut circuler dans le circuit magnétique tertiaire 25. Il est précisé qu'en fonctionnement nominal, c'est-à-dire en l'absence de défauts électriques entre réseaux, l'organe de coupure 28 est en position fermé.

Tel que cela sera détaillé ultérieurement, le circuit magnétique tertiaire 25 court-circuité annule le flux magnétique dans le circuit de dérivation 27 et permet ainsi d'éviter certaines fuites magnétiques.

De même, tel que cela sera précisé ci-après, en cas de détection d'un courant de défaut entre les réseaux moyenne tension reliés par le circuit magnétique primaire 21, l'organe de coupure 28 passe en position ouverte, ce qui permet la circulation d'un flux magnétique dans le circuit de dérivation. Cela permet d'augmenter fortement l'impédance équivalente vu du circuit magnétique primaire tout en conservant une saturation du circuit magnétique secondaire, et un découplage des comportements du circuit magnétique primaire et du circuit magnétique secondaire.

Le transformateur 20 peut être typiquement un transformateur HTA/BT ayant un rapport d'enroulement entre le circuit magnétique primaire et le circuit magnétique secondaire de l'ordre de 1.

Selon un mode de réalisation préférentiel, le transformateur 20 de ligne comprend au moins trois colonnes.

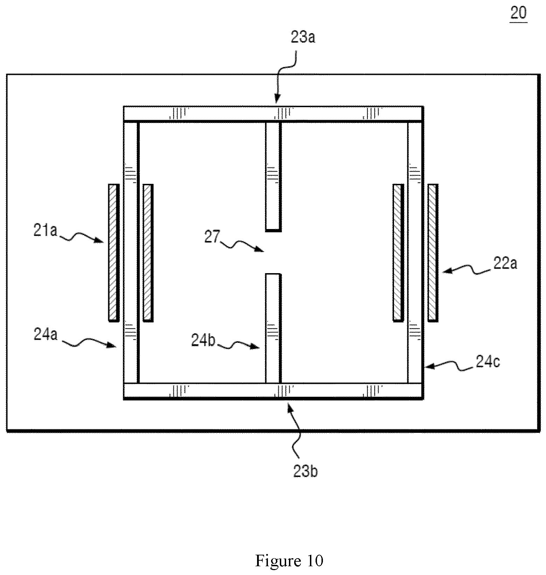

Comme on le voit sur la figure 10 classiquement un tel transformateur 20 présente un circuit magnétique primaire 21 qui peut être composé d'un seul bobinage primaire 21a, un circuit magnétique secondaire 22 qui peut être composé d'un seul bobinage secondaire 22a, et un circuit magnétique tertiaire 25 qui peut être composé d'un seul bobinage tertiaire 25a.

Selon le mode de réalisation illustré sur la figure 10, le transformateur 20 est un transformateur monophasé. Selon ce mode de réalisation, le transformateur 20 comprend deux culasses 23a et 23b qui encadrent trois colonnes 24a, 24b et 24c. Le circuit magnétique primaire 21 comprend un bobinage 21a positionné autour d'une première colonne 24a. Le circuit magnétique secondaire 22 comprend un bobinage secondaire 22a positionné autour d'une troisième colonne 24c.

Une deuxième colonne 24b du transformateur 20 est positionnée entre les colonnes 24a et 24b. Cette deuxième colonne 24b comprend le circuit de dérivation 27. En étant ainsi positionné, le circuit de dérivation 27 permet de découpler magnétiquement le circuit magnétique primaire 21 du circuit magnétique secondaire 22, en cas de défaut réseau.

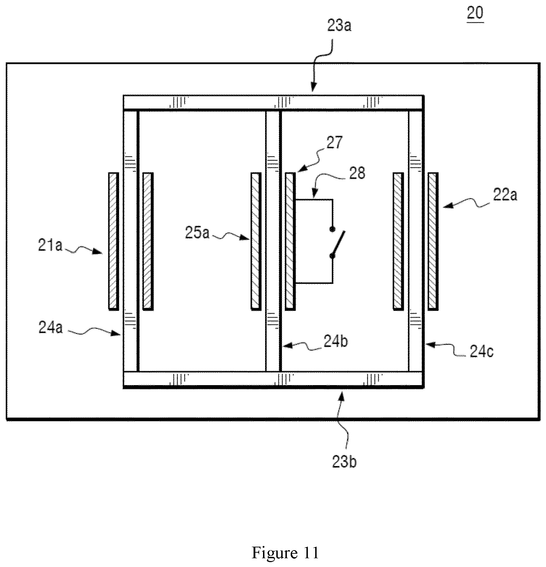

Selon le mode de réalisation illustré sur la figure 11, la carcasse du noyau magnétique est formée de deux culasses 23a et 23b reliées par trois colonnes 24a, 24b et 24c. Le bobinage primaire 21a, le bobinage secondaire 22a et le bobinage tertiaire 25a sont enroulés chacun sur l'une respective des trois colonnes 24a, 24b, 24c. En d'autres termes, les bobinages ne sont pas concentriques. Comme cela est schématisé sur la figure 10, le bobinage tertiaire 25a est positionné sur la colonne 24b, de sorte à être interposé entre le bobinage primaire 21a et le bobinage secondaire 22a. Ce positionnement permet au circuit magnétique tertiaire 25 de relier magnétiquement le circuit magnétique primaire 21 et le circuit magnétique secondaire 22.

Les culasses 23 et colonnes 24 sont de façon connue en soi réalisées par un empilement de tôles en matériau magnétique doux, isolées électriquement entre elles par exemple par un vernis pour réduire les pertes par courant de Foucault. Bien entendu les culasses 23 et colonnes 24 peuvent être réalisées différemment.

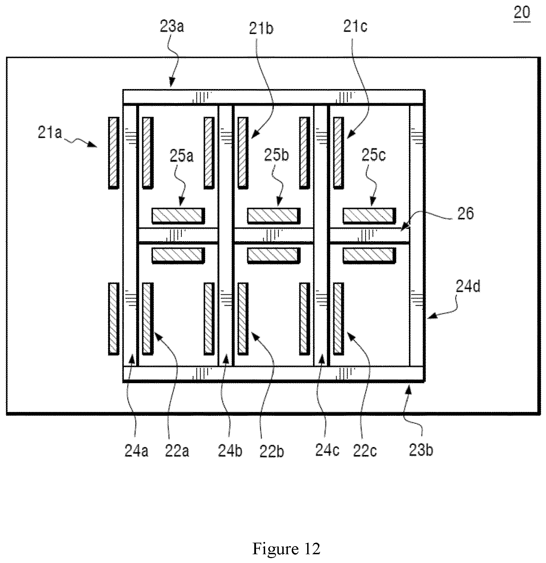

Selon un autre mode de réalisation, illustré sur la figure 12, le circuit magnétique primaire 21 peut être composé de trois bobinages primaire 21a, 21b et 21c. De même, selon ce mode de réalisation, le circuit magnétique secondaire 22 peut être composé de trois bobinages secondaires 22a, 22b et 22c. Le circuit magnétique tertiaire 25 peut lui aussi être composé de trois bobinages tertiaires 25a, 25b et 25c.

Selon le mode de réalisation illustré sur la figure 12, la carcasse du noyau magnétique est formée de deux culasses 23a et 23b reliées par quatre colonnes 24a, 24b, 24c et 24d. Les bobinages primaires 21a, 21b, 21c, et les bobinages secondaires 22a, 22b et 22c sont enroulés par paires sur l'une respective des trois colonnes 24a, 24b et 24c.

La colonne 24d est dépourvue de bobinage pour conserver une inductance magnétisante homopolaire suffisante de l'ordre de l'inductance magnétisante en régime équilibré /3.

Il est important de noter que sur une même colonne, le bobinage primaire et le bobinage secondaire sont espacés. En d'autres termes, sur une même colonne, le bobinage primaire et le bobinage secondaire sont décalés longitudinalement de sorte à ne pas être concentriques. En d'autres termes, un bobinage primaire et un bobinage secondaire partagent une même colonne mais ne sont pas superposés.

En sus, selon ce mode de réalisation, la carcasse du noyau magnétique comprend une traverse 26, sensiblement parallèle aux deux culasses 23a et 23b, et positionnée entre les deux culasses 23a et 23b. La traverse 26 relie les quatre colonnes 24a, 24b, 24c et 24d. Ainsi, comme cela est schématisé sur la figure 12, les culasses 23a, 23b la traverse 26 et les colonnes 24a, 24b, 24c, 24d, forment une grille.

D'une manière avantageuse, selon ce mode de réalisation, le tertiaire est composé de trois bobinages tertiaires 25a, 25b et 25c. Les trois bobinages tertiaires 25a, 25b et 35c sont enroulés autours de la traverse 26. Il est précisé que les trois bobinages tertiaires 25a, 25b et 25c sont décalés les uns par rapport aux autres longitudinalement sur la traverse 26, de sorte à ne pas être disposés les uns autour des autres. D'une manière préférentielle, les bobines tertiaires 25a, 25b et 25c sont disposées sur la traverse 26, chacune entre deux colonnes 24a, 24b, 24c ou 24d. Cette architecture permet aux bobines tertiaires 25a, 25b, 25c d'être positionnées entre les bobines primaires 21a, 21b, 21c et les bobines secondaire 22a, 22b et 22c. Ce positionnement permet au circuit magnétique tertiaire 25 de relier magnétiquement le circuit magnétique primaire 21 et le circuit magnétique secondaire 22.

En variante, le mode de réalisation triphasée illustrée figure 12 pourrait être cuirassé.

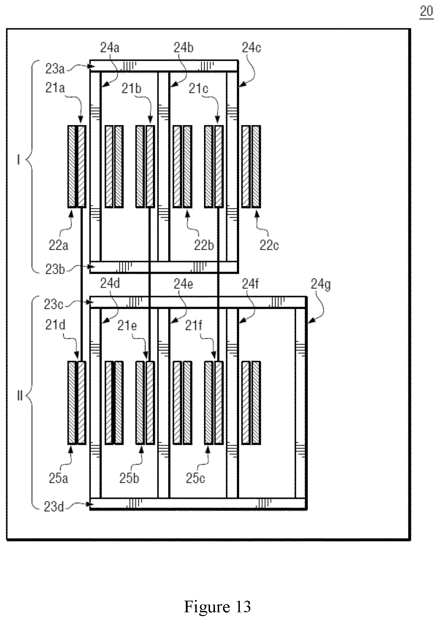

Selon un autre mode de réalisation, illustré sur la figure 13, le circuit magnétique primaire 21 peut être composé de six bobinages primaire 21a, 21b, 21c, 21d, 21e et 21f. De même, selon ce mode de réalisation, le circuit magnétique secondaire 22 peut être composé de trois bobinages secondaires 22a, 22b et 22c. Le circuit magnétique tertiaire 25 peut lui aussi être composé de trois bobinages tertiaires 25a, 25b et 25c.

Selon le mode de réalisation illustré sur la figure 13, le transformateur comprend deux noyaux magnétiques. Un premier noyau magnétique I a une fonction de transformateur série saturable et un deuxième noyau magnétique II a une fonction de circuit magnétique tertiaire. La carcasse du premier noyau magnétique I est formée de deux culasses 23a et 23b reliées par trois colonnes 24a, 24b, 24c. Les bobinages primaires 21a, 21b, 21c, et les bobinages secondaires 22a, 22b et 22c sont enroulés par paires sur l'une respective des trois colonnes 24a, 24b et 24c.

Il est important de noter que selon ce mode de réalisation, sur une même colonne, le bobinage primaire et le bobinage secondaire sont superposés. Plus précisément, pour chaque colonne, le bobinage primaire est enroulé autour de la colonne et le bobinage secondaire est enroulé autour du bobinage primaire.

D'autre part, la carcasse du deuxième noyau magnétique II est formée de deux culasses 23c et 23d reliées par quatre colonnes 24d, 24e, 24f, et 24g. Les bobinages primaires 21d, 21e, 21f, et les bobinages tertiaires 25a, 25b et 25c sont enroulés par paires sur l'une respective des trois colonnes 24d, 24e et 24f.

La colonne 24g est dépourvue de bobinage pour conserver une inductance magnétisante homopolaire suffisante de l'ordre de l'inductance magnétisante en régime équilibré /3.

Il est important de noter que selon ce mode de réalisation, sur une même colonne, le bobinage primaire et le bobinage tertiaires sont superposés. Plus précisément, pour chaque colonne, le bobinage primaire est enroulé autour de la colonne et le bobinage secondaire est enroulé autour du bobinage primaire.

En outre, selon ce mode de réalisation, chaque bobinage primaire 21a, 21b, 21c du premier noyau magnétique et connecté en série à un bobinage primaire 21d, 21e, 21f, respectif du deuxième noyau magnétique. Il est précisé que par « connecté en série », il est entendu qu'un flux électrique circule entre deux bobinages primaires connectés en série.

En sus, selon ce mode de réalisation, la carcasse du noyau magnétique comprend une traverse 26, sensiblement parallèle aux deux culasses 23a et 23b, et positionnée entre les deux culasses 23a et 23b. La traverse 26 relie les quatre colonnes 24a, 24b, 24c et 24d. Ainsi, comme cela est schématisé sur la figure 12, les culasses 23a, 23b la traverse 26 et les colonnes 24a, 24b, 24c, 24d, forment une grille.

D'une manière avantageuse, selon ce mode de réalisation, le tertiaire est composé de trois bobinages tertiaires 25a, 25b et 25c. Les trois bobinages tertiaires 25a, 25b et 35c sont enroulés autours de la traverse 26. Il est précisé que les trois bobinages tertiaires 25a, 25b et 25c sont décalés les uns par rapport aux autres longitudinalement sur la traverse 26, de sorte à ne pas être disposés les uns autour des autres. D'une manière préférentielle, les bobines tertiaires 25a, 25b et 25c sont disposées sur la traverse 26, chacune entre deux colonnes 24a, 24b, 24c ou 24d. Cette architecture permet aux bobines tertiaires 25a, 25b, 25c d'être positionnées entre les bobines primaires 21a, 21b, 21c et les bobines secondaire 22a, 22b et 22c. Ce positionnement permet au circuit magnétique tertiaire 25 de relier magnétiquement le circuit magnétique primaire 21 et le circuit magnétique secondaire 22.

Bien entendu les modes de réalisation présentés ci-avant ne sont que des exemples, tous modes de réalisation permettant une saturation maîtrisée sont envisageables.

D'une manière avantageuse, le circuit magnétique primaire 21 et le circuit de dérivation 27 sont dimensionnés pour supporter un flux équivalent à une tension de défaut de 20kVrms phph. En conséquence, en fonction de l'architecture du transformateur 20, la section des colonnes 24a, 24b, 24c et de la traverse 26 du transformateur est dimensionnée pour supporter un flux équivalent à une tension de défaut de 20kVrms phph.

D'une manière préférentielle, le circuit magnétique secondaire 220 est configuré pour supporter un flux équivalent au flux nominal de l'onduleur soit de l'ordre de 500Vrms phph.

De plus, en cas de défaut, le circuit magnétique primaire 21 est configuré pour présenter une inductance magnétisante saturée maîtrisée équivalente au moins supérieure à 1/20 de l'inductance magnétique non saturée du transformateur 20.

Le transformateur 20 de ligne présente deux points de couplage 20A, 20B, formés par les extrémités respectives des bobinages primaires 21a, 21b et 21c, chacun adaptés pour être reliés à un réseau électrique A, B. Les bobinages primaires 21a, 21b et 21c sont ainsi placés en série entre les deux réseaux électriques A et B. Typiquement, il peut s'agir, par exemple de deux réseaux électriques A, B de distribution différents, ou de deux portions distinctes d'un même réseau électrique.

Ainsi, cette disposition permet très avantageusement de limiter un courant de défaut à une valeur proche d'un courant nominal et de limiter la tension aux bornes de l'onduleur 40 en dessous d'une tension nominale de celui-ci. En d'autres termes, cette disposition permet de protéger l'onduleur 40 basse tension en évitant qu'il ne soit exposé à une tension trop importante. Ainsi, la saturation du circuit magnétique secondaire 22 permet de protéger l'onduleur 40 basse tension en évitant l'apparition de hautes tensions lors d'un défaut sur un réseau. Ainsi l'onduleur 40 basse tension peut être aisément intégré au compensateur synchrone statique série moyenne tension 1 et dans une infrastructure de réseaux électriques A, B existants.

Selon une disposition particulière, on pourra choisir un transformateur 20 de type basse tension, adapté pour délivrer/recevoir une tension de 500Vrms à ses bornes. En outre, le circuit magnétique du transformateur pourra être dimensionné pour saturer à partir d'une tension de 1000V pour atteindre une inductance magnétisante saturée maîtrisée de l'ordre de 100mH, soit environ 1/10 à 1/20 de l'inductance magnétisante non saturée du transformateur. Le transformateur est dimensionné pour ne pas dépasser une tension résiduelle au secondaire de l'ordre de 1000Vrms en cas de saturation du primaire à une tension de l'ordre de 20kVrms.

### Onduleur basse tension

L'onduleur 40 basse tension est une disposition technique particulièrement avantageuse de l'invention. En effet, l'onduleur 40 basse tension est un élément relativement peu encombrant et peu onéreux, par rapport aux onduleurs haute tension, de sorte que son intégration ne nécessite pas de grands investissements sur les réseaux électriques A, B de distribution.

En sus, il est remarquable que l'intégration d'un onduleur 40 basse tension pour sécuriser un dispositif de liaison entre deux réseaux électriques A, B moyenne tension va à l'encontre des préjugés techniques du domaine. En effet, on aurait pu être naturellement dirigé vers un onduleur haute tension, adapté pour recevoir des hautes tensions émises en cas de défaut sur l'un des réseaux, mais très encombrant et difficilement intégrable dans les réseaux électriques A, B existants.

Or, dans le cas présent, c'est la synergie du transformateur 20 spécifique à l'invention et de l'onduleur 40 basse tension qui permet de garantir une sécurité optimale tout en utilisant des composants basse tension (i.e. donc en s'affranchissant de l'utilisation de composants haute tension).

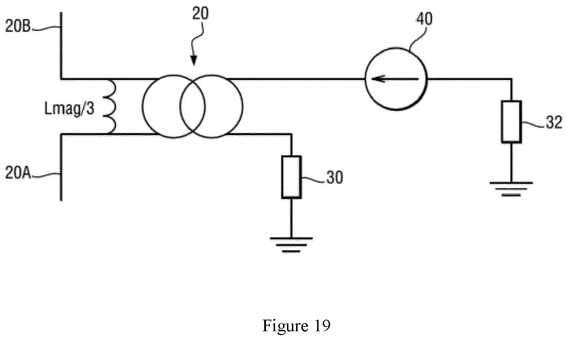

Comme on peut le voir sur les figures, notamment sur la figure 19, l'onduleur 40 basse tension est électriquement connecté au transformateur 20 de ligne.

L'onduleur 40 est adapté pour générer une tension qui est transmise au transformateur 20. Cette tension générée par l'onduleur 40 permet de définir l'orientation d'une circulation électrique entre les deux points de couplage 2A, 2B.

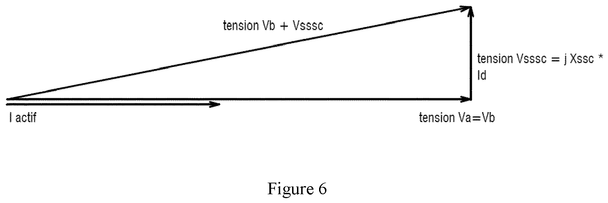

Comme on le voit sur la figure 6 en créant une source de tension Vsssc purement réactive en quadrature, on force un courant actif entre deux sources de tensions identiques, limité par l'impédance du réseau.

Un calcul montre que pour une hypothèse de puissance transférée de 4MW, le courant de transfert (4MW / (20kV.V3) est de 116 Arms.

L'onduleur 40 peut être alimenté sur son entrée 42 par tous moyens appropriés, à partir d'un réseau BT ou encore une alimentation dérivée des réseaux HTA.

### Contacteur

Comme indiqué précédemment, le compensateur synchrone statique série moyenne tension 1 selon l'invention comprend des moyens 60 de coupure contre la propagation de défauts limités à des valeurs proches du courant nominal entre lesdits deux réseaux. Typiquement ces moyens de protection peuvent être formés d'au moins un contacteur 60 HTA et de préférence deux contacteurs 60A, 60B adaptés pour séparer les deux réseaux en cas de défaut sur l'un d'eux.

Selon une disposition particulière, les contacteurs 60A, 60B adaptés pour séparer les deux réseaux en cas de défaut sur l'un d'eux sont placés au niveau des points de couplage 2A, 2B.

Un seul contacteur 60A ou 60B suffit en théorie. La présence de deux contacteurs 60A et 60B permet cependant d'ouvrir le couplage entre les deux réseaux A et B et d'isoler le compensateur synchrone 1 des deux réseaux A et B pour des besoins opérationnels (par exemple de maintenance).

Tel que cela sera développé ci-après, les défauts les plus fréquents sont les défauts de triphasés et les défauts de mise à la terre.

D'une manière préférentielle, les deux points de couplage 20A, 20B comprennent chacun un contacteur 60A, 60B. Cette disposition permet avantageusement de pouvoir isoler le compensateur synchrone statique série moyenne tension 1 des deux réseaux électriques A, B. Cela peut être particulièrement utile, par exemple, pour des opérations de maintenance.

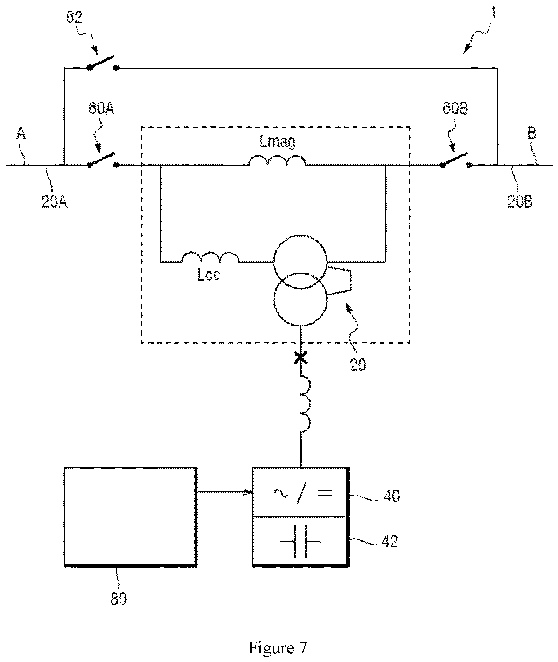

Selon une disposition avantageuse, comme illustré sur la figure 7, les deux contacteurs 60A, 60B prévus aux points de couplage 20A, 20B peuvent être complétés d'un contacteur de contournement ou by-pass 62 placé entre les deux points de couplage 20A, 20B, pour boucler les réseaux électriques A, B sans passer par le compensateur synchrone statique série moyenne tension 1 (bouclage temporaire en cas d'incident par exemple).

Préférentiellement, le ou les contacteur 60A, 60B, 62 sont des contacteurs moyenne tension. Ainsi, l'invention permet de limiter un courant de défaut à une valeur proche d'un courant nominal et d'ouvrir la connexion entre les réseaux électriques A, B avec un contacteur 60A, 60B moyenne tension sans avoir besoin de recourir à un disjoncteur moyenne tension qui serait bien plus onéreux.

### Ensemble de réseau électrique

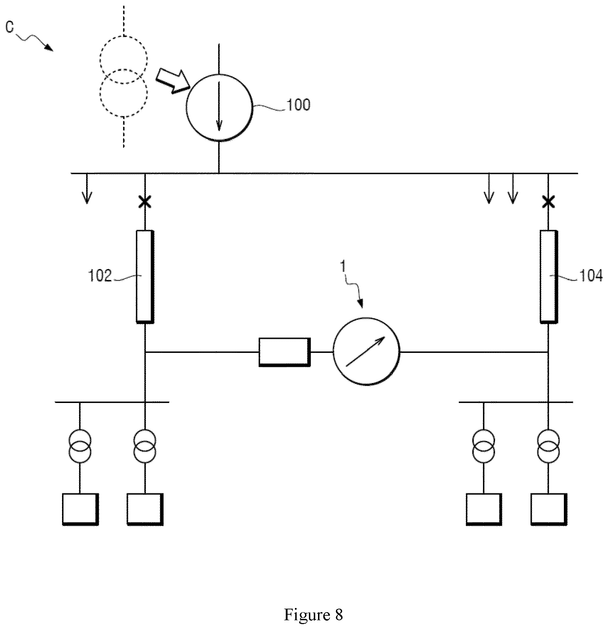

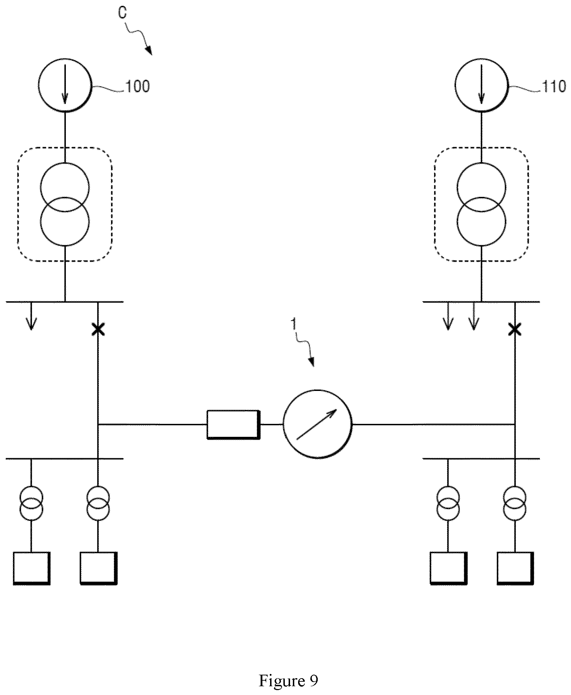

Selon un deuxième aspect, comme représenté sur les figures 8 et 9, l'invention concerne un ensemble C de réseaux électriques A, B comprenant deux portions d'un même réseau électrique de distribution, ou deux réseaux électriques de distribution, reliés par un compensateur synchrone statique série moyenne tension 1.

On a ainsi illustré sur la figure 8 un ensemble de réseaux électriques C comprenant un compensateur synchrone statique série moyenne tension 1 selon l'invention, couplant deux départs 102, 104 d'un poste source 100.

On a illustré sur la figure 9 un autre ensemble de réseaux électriques C comprenant un compensateur synchrone statique série moyenne tension 1 selon l'invention couplant des réseaux provenant de deux postes sources 100, 110.

### Procédé de commande et fonctionnement

Selon un troisième aspect, l'invention concerne un procédé de commande d'un compensateur synchrone statique série moyenne tension 1 selon l'invention.

Le procédé de commande comprend notamment les étapes suivantes :
(a) réception sur le module 80 d'un ordre de circulation d'un signal électrique d'un premier point de liaison vers le second point de liaison ;
(b) génération par l'onduleur 40 d'une basse tension pour orienter la circulation du signal électrique conformément à l'ordre reçu ;
(c) détection d'un signal électrique indiquant un défaut provenant d'un premier réseau de distribution et protection du second réseau de distribution en bloquant l'onduleur 40.

Selon une disposition particulièrement avantageuse, l'étape (b) peut comprendre la génération d'une basse tension inférieure ou égale à 1kV.

En sus, l'étape (c) peut comprendre les étapes suivantes :
(c1) détection d'un courant de défaut ;
(c3) blocage de l'onduleur 40 et limitation du courant de défaut par le transformateur 20 ;
(c4) ouverture du contacteur 60A, 60B relié au réseau n'étant pas en défaut ;
(c5) transmission d'informations d'état et de détection du défaut à l'organe 80 de contrôle du réseau en défaut.

De plus, selon une disposition particulière, l'étape (c) peut aussi comprendre l'étape suivante : (c2) détermination du réseau à l'origine du défaut.

On comprendra que dans ce cas, l'étape (c2) est préférentiellement intercalée entre les étapes (c1) et (c3).

Selon une disposition particulièrement avantageuse, l'étape (c3) comprend en outre le passage en position ouverte de l'organe de coupure 28. Comme expliqué précédemment, le passage en position ouverte de l'organe de coupure permet de couper le circuit de dérivation 27 et d'autoriser un chemin magnétique vu du circuit magnétique primaire. Ainsi, cela permet de maintenir une impédance élevée vue du circuit magnétique primaire. En sus, cette disposition permet au circuit magnétique secondaire de demeurer dans un état de saturation maitrisée.

Ainsi, en d'autres termes et en référence aux figures, en fonctionnement, il peut être constaté une importante différence de production et/ou de consommation entre les deux réseaux électriques A et B. D'une manière avantageuse, le compensateur synchrone statique série moyenne tension 1 permet de faire communiquer les deux réseaux électriques A, B pour gérer les flux électriques.

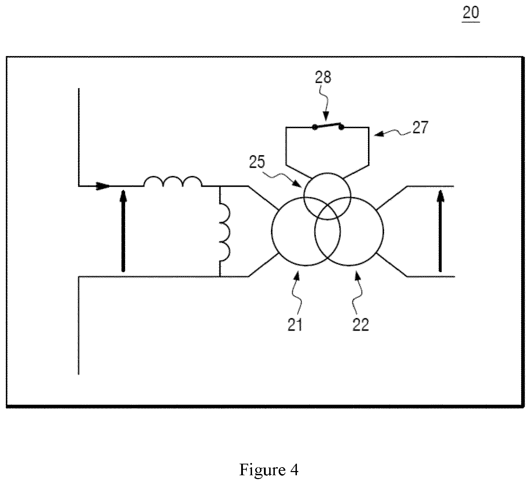

L'onduleur 40 permet d'influencer le sens du courant en générant une tension schématisée sur la figure 4 positive ou négative. Ainsi, bien que basse, la tension générée par l'onduleur 40 permet d'influer directement sur le sens de circulation de l'électricité à travers le compensateur synchrone statique série moyenne tension 1, du réseau électrique A vers le réseau électrique B ou inversement.

Si un défaut est détecté sur l'un des réseaux électrique (étape (c)) l'onduleur 40 est immédiatement bloqué et le transformateur 20 limite le courant de défaut.

D'une manière quasi-simultanée un contacteur 60A, 60B est ouvert pour isoler le réseau électrique A, B en défaut. Dans le cas où le compensateur synchrone statique série moyenne tension 1 comprend deux contacteurs 60A, 60B, sera ouvert celui étant sur le point de couplage au réseau électrique A, B en défaut, voire les deux contacteurs.

Ainsi, cette disposition permet de limiter en cas de défaut triphasé ou de bloquer en cas de défaut à la terre pratiquement immédiatement, puis de séparer le réseau sain du réseau en défaut.

Il est remarquable que le délai de coupure du compensateur synchrone statique série moyenne tension 1 est inférieure au délai de détection et de temporisation de défaillance par le réseau lui-même.

Ainsi, selon un mode de réalisation avantageux, le compensateur synchrone statique série moyenne tension 1 peut transmettre au réseau concerné la détection de défaillance. Il y a alors une redondance dans la détection de défaillance, ce qui augmente la sécurité globale.

En sus, après avoir isolé le réseau électrique A, B défaillant, le compensateur synchrone statique série moyenne tension 1 transmet ses informations d'état à un organe de contrôle tel qu'un gestionnaire de réseau.

Comme indiqué précédemment, les deux défauts les plus courant sont d'une part un défaut triphasé (court-circuit) et d'autre part un défaut de liaison à la terre.

Les deux scénarios correspondants à ces défauts typiques sont décrits ci-après en regard des figures 13 à 23.

### Exemple de fonctionnement - cas d'un défaut triphasé

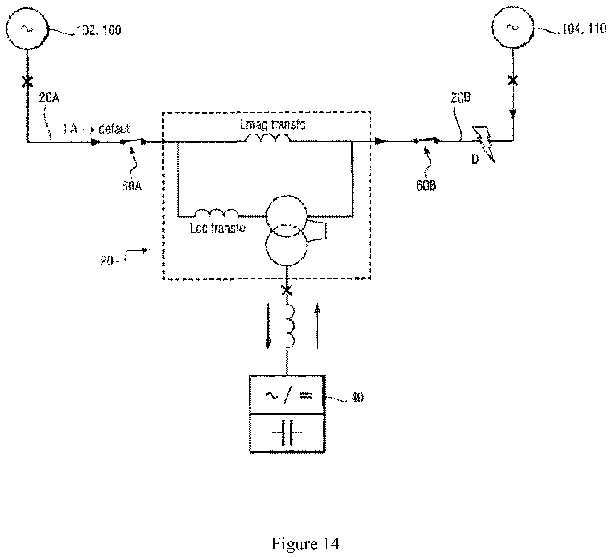

Dans cet exemple, en référence à la figure 14, on considère la présence d'un court-circuit (défaut triphasé D) sur le départ du réseau électrique B.

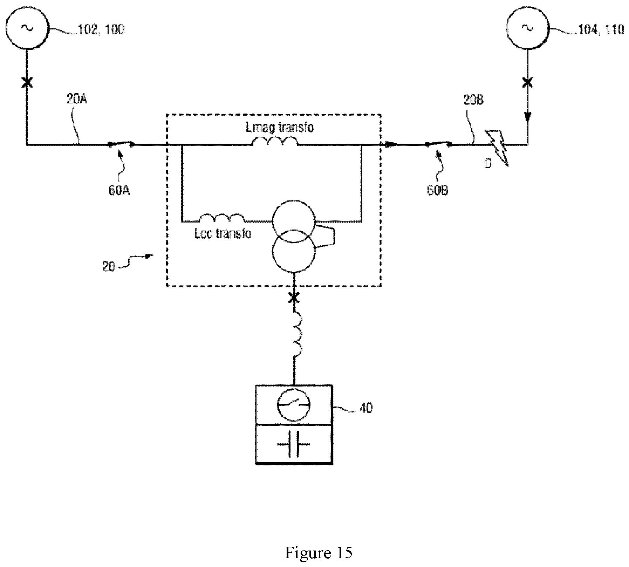

A la détection du courant de défaut, le compensateur synchrone statique série moyenne tension 1 commande le blocage de l'onduleur 40 avec un temps de réaction court (environ quelques ms) comme illustré sur la figure 15.

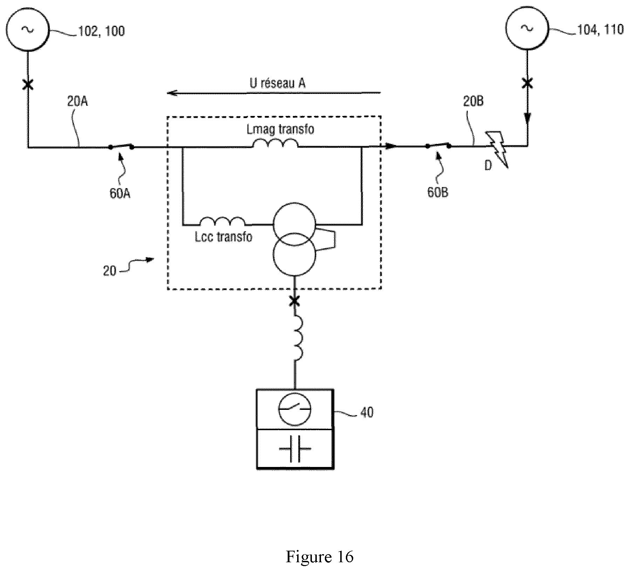

Au blocage de l'onduleur 40, la tension du réseau électrique B se retrouve directement aux bornes du transformateur 20 de ligne comme illustré sur la figure 16. Ainsi, dans le pire des cas, on peut avoir 0V côté réseau électrique B et 20kV côté réseau électrique A. En d'autres termes, la partie magnétique correspondant au circuit magnétique secondaire du transformateur sature et protège de surtensions l'onduleur.

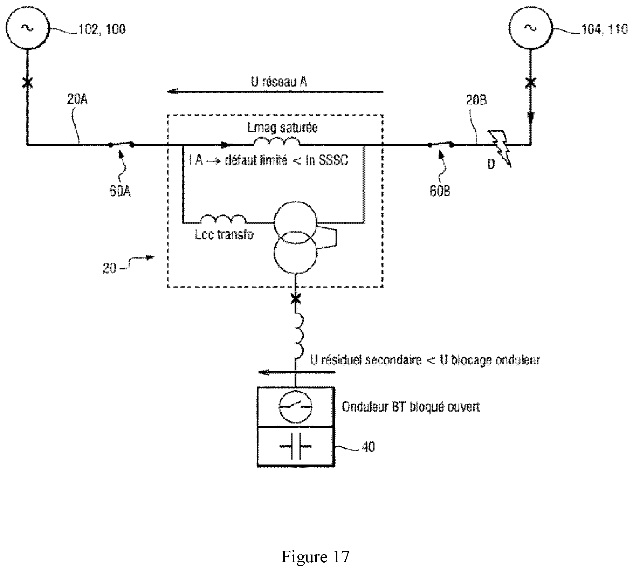

De plus, le circuit magnétique primaire et le circuit magnétique secondaire étant sur des colonnes séparées, la structure avec le circuit de dérivation 27 comprenant un circuit magnétique tertiaire 25 et un organe de coupure 28 du transformateur 20 permet de conserver une inductance suffisante vu du circuit magnétique primaire pour limiter le courant de défaut à une valeur proche du courant nominal de transfert comme illustré sur la figure 17 (et ce malgré la saturation du circuit magnétique secondaire).

Ce courant étant limité, le réseau électrique A ne réagit pas (temps de saturation puis limitation du courant étant inférieur au seuil et temporisation de détection de défaillance par un réseau).

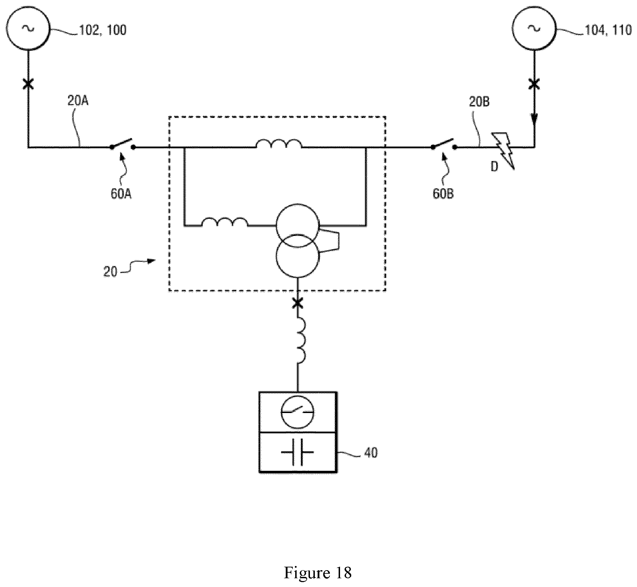

L'ordre de blocage de l'onduleur 40 entraine un ordre d'ouverture du contacteur 60A, 60B du compensateur synchrone statique série moyenne tension 1 qui ouvre quelques centaines de millisecondes plus tard sur un courant limité et découple finalement le réseau électrique A du réseau électrique B comme illustré sur la figure 18.

Le compensateur synchrone statique série moyenne tension 1 communique avec les postes, transmet sa détection de défaut et son état.

La saturation du transformateur 20 est une disposition particulièrement avantageuse. En effet, si le transformateur 20 de ligne ne saturait pas l'inductance magnétisante limiterait fortement le défaut qui ne serait pas détectable par le réseau électrique A. Mais une tension de ligne haute tension s'appliquerait alors à l'onduleur 40, ce qui détruirait l'onduleur 40 basse tension.

En sus, le circuit magnétique de dérivation et le découplage physique du circuit magnétique primaire et du circuit magnétique secondaire permettent de doser la saturation, en effet, si le transformateur 20 de ligne saturait complètement, le secondaire du transformateur 20 ne serait plus magnétiquement couplée au primaire et ainsi l'onduleur 40 serait « protégé » des tensions et courants induits par le défaut.

Cependant l'inductance magnétisante résiduelle serait faible et ne limiterait pas le courant de défaut qui circulerait sur le réseau électrique A. De sorte que le réseau électrique A ne serait pas « découplé » du réseau B ce qui entrainerait un risque de double détection de défaillance (chaque réseau se détecterait en défaut et il serait délicat de trouver la source du problème).

### Exemple de fonctionnement - cas d'un défaut monophasé à la terre

Dans l'exemple suivant, représenté sur les figures 19 à 23, on estime que le réseau électrique B présente un défaut de mise à la terre DT.

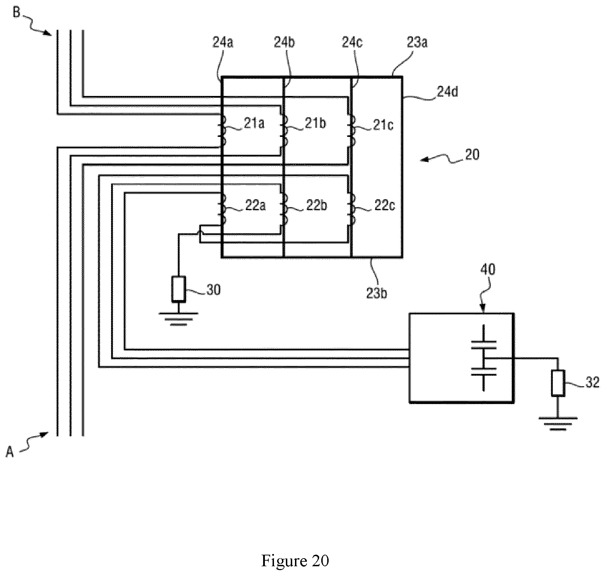

La figure 20 représente le schéma du transformateur 20 à quatre colonnes 24, tandis que la figure 19 représente le schéma homopolaire équivalent.

On aperçoit sur la figure 20 les bobines secondaires 22a, 22b et 22c montés en étoile. Leur point commun est relié à la terre par une impédance 30. Les bobines secondaires 22a, 22b et 22c sont par ailleurs reliées aux sorties respectives de l'onduleur triphasé 40, lequel est lui-même relié à la terre par une impédance adaptée 32. Les bobines primaires 21a, 21b et 21c sont quant à elles placées en série entre les deux points de couplage aux réseaux A et B.

On retrouve sur la figure 19 l'inductance de magnétisation non saturée, homopolaire Lmag/3 du transformateur 20.

En fonctionnement normal, les courants homopolaires sont naturellement limités par l'impédance magnétisante homopolaire du transformateur 20 (si l'impédance homopolaire du secondaire est suffisamment impédante).

Or, d'une manière avantageuse, la présence d'une quatrième colonne 24d dans le transformateur 20 permet d'avoir une inductance magnétisante homopolaire.

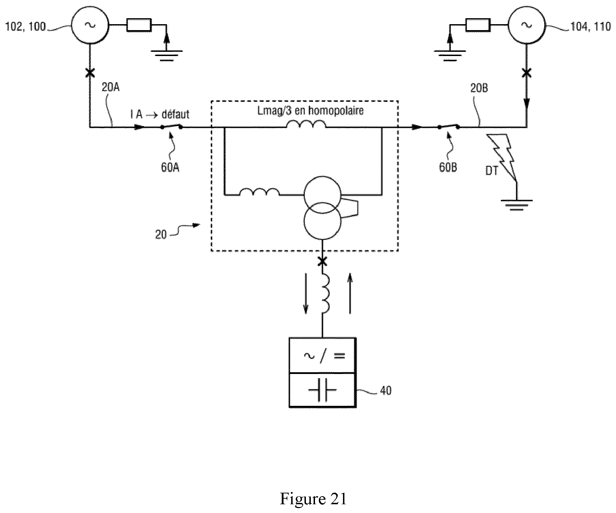

En cas d'un défaut d'une phase à la terre sur le réseau électrique B, en fonction du système de mise à la terre / détection des défauts terre du système, le compensateur synchrone statique série moyenne tension 1 détecte le défaut et potentiellement sa localisation (réseau A ou réseau B) comme illustré sur la figure 21.

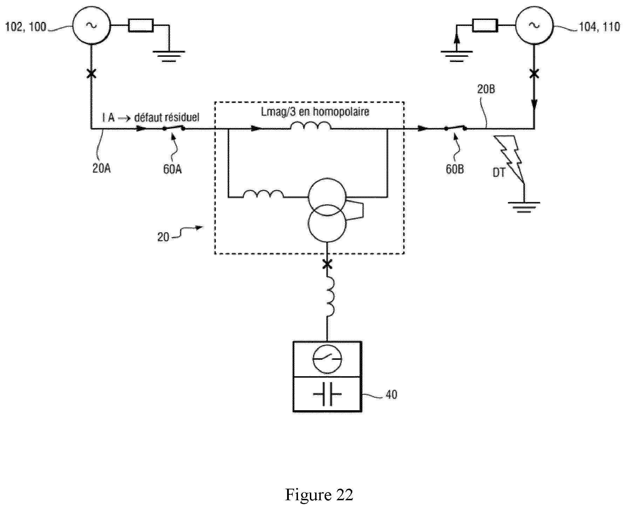

A la détection par le compensateur synchrone statique série moyenne tension 1, le contrôle 80 commande le blocage de l'onduleur 40 comme illustré sur la figure 22 avec un temps de réaction court (de l'ordre de quelques millisecondes). Ainsi, il n'y a pas de tension anormale de lignes entre le réseau A et B, et le blocage de l'onduleur 40 n'entraine pas la saturation du transformateur 20.

Le circuit secondaire est ouvert, les courants homopolaires sont limités par l'impédance magnétisante homopolaire du transformateur 20. Le réseau sain ne détecte pas de défaut, ou au pire, le réseau sain détecte un défaut résistif pour lesquels les protections sont temporisées ce qui laisse le temps de découpler le SSSC.

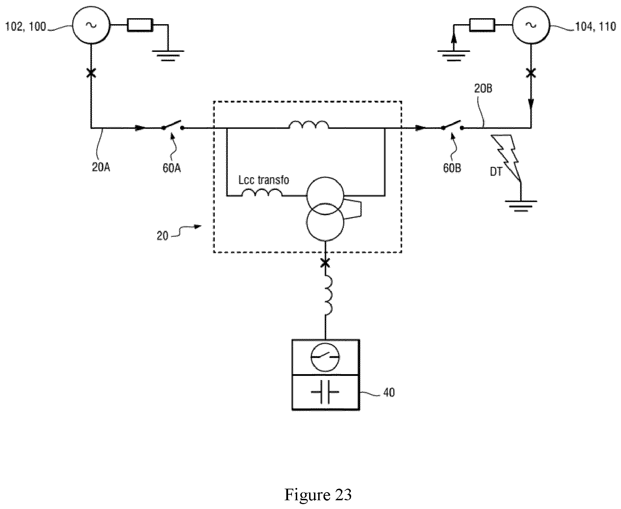

L'ouverture du contacteur 60A, 60B finit par découpler les deux réseaux, comme illustré sur la figure 23.

L'invention offre de nombreux avantages par rapport à l'état de la technique.

Elle propose un moyen permettant de coupler deux réseaux électriques ou portions de réseaux électriques avec une limitation efficace de la contribution d'un réseau à une partie du réseau en défaut.

Elle réduit la puissance installée par rapport à des installations proposées selon l'état de la technique et utilise des matériels, contacteurs, transformateur et onduleur, connus en soi séparément, répandus et donc de coût raisonnable.

L'invention ne requiert pas de contrôle complexe pour la gestion des défauts.

L'invention permet de minimiser la puissance en évitant de gérer les tensions et courants de défaut par l'onduleur.

L'invention permet de limiter le courant de défaut à une valeur proche du courant nominal et d'ouvrir avec un contacteur MT sans avoir besoin de recourir à un disjoncteur MT (qui serait plus cher) (une fonction de protection additionnelle est assurée par les disjoncteurs des postes sources interconnectés).

Par ailleurs l'ensemble des moyens composant le compensateur étant des ensembles à faible puissance, ils peuvent être réunis dans un environnement commun de dimensions limitées ce qui facilite l'implantation du compensateur.

## Revendications

1. Compensateur synchrone statique série moyenne tension (1) adapté pour connecter électriquement deux réseaux électriques (A, B) de distribution ou pour connecter deux portions d'un même réseau électrique de distribution, comprenant un transformateur (20) de ligne et un onduleur (40) basse tension, l'onduleur (40) basse tension étant électriquement connecté au transformateur (20) de ligne, le transformateur (20) de ligne présentant deux points de couplage (20A, 20B) chacun adapté pour être relié à un des deux réseaux électriques (A, B) ou à une des deux portions d'un même réseau électrique de distribution, et le transformateur (20) de ligne comprenant un circuit magnétique primaire (21) et un circuit magnétique secondaire (22), le compensateur synchrone statique série moyenne tension (1) étant **caractérisé en ce que** le transformateur (20) comprend un circuit de dérivation (27) reliant magnétiquement le primaire (21) et le secondaire (22) pour permettre à rendre indépendant le comportement du circuit magnétique secondaire (22) du comportement du circuit magnétique primaire (21) en cas d'application sur le circuit magnétique primaire (21) de la tension d'un réseau après un blocage sur réseau triphasé de l'onduleur (40).

2. Compensateur synchrone statique série moyenne tension (1) selon la revendication 1, dans lequel le primaire (21) et le secondaire (22) présentent chacun au moins un bobinage, ledit au moins un bobinage primaire (21a, 21b, 21c) et ledit au moins un bobinage secondaire (22a, 22b, 22c) étant décalés longitudinalement de sorte à ne pas être concentriques.

3. Compensateur synchrone statique série moyenne tension (1) selon l'une quelconque des revendications précédentes, dans lequel le circuit de dérivation (27) comprend un circuit magnétique tertiaire (25).

4. Compensateur synchrone statique série moyenne tension (1) selon la revendication 3, dans lequel le circuit de dérivation (27) comprend un organe de coupure (28) mobile entre une position fermée dans laquelle le circuit magnétique tertiaire (25) est court-circuité et une position ouverte dans laquelle un courant électrique peut circuler dans le tertiaire (25).

5. Compensateur synchrone statique série moyenne tension (1) selon l'une quelconque des revendications précédentes, **caractérisé par le fait que** le transformateur (20) est adapté pour présenter une saturation maitrisée à partir d'une tension de l'ordre du double d'une tension nominale de l'onduleur (40) et/ou à partir d'une tension de l'ordre de 1000V.

6. Compensateur synchrone statique série moyenne tension (1) selon l'une quelconque des revendications précédentes, **caractérisé par le fait que** le transformateur (20) est adapté pour présenter à l'état de saturation maitrisée une inductance magnétisante saturée maitrisée (Lmag) équivalente pour le circuit magnétique primaire (21) au moins supérieure à 1/20 de l'inductance magnétique non saturée du transformateur et/ou supérieure à 100mH.

7. Compensateur synchrone statique série moyenne tension (1) selon l'une quelconque des revendications précédentes, dans lequel au moins l'un des points de couplage (20A, 20B) comprend un contacteur (60A, 60B) adapté pour séparer les deux réseaux électriques (A, B) ou les deux portions d'un même réseau électrique de distribution en cas de défaut sur l'un d'eux et/ou comprend deux contacteurs (60A, 60B) placés respectivement au niveau des points de couplage, adaptés pour séparer les deux réseaux électriques (A, B) en cas de défaut sur l'un d'eux et isoler le compensateur.

8. Compensateur synchrone statique série moyenne tension (1) selon l'une quelconque des revendications précédentes **caractérisé par le fait qu'**il comprend un contacteur de contournement parallèle (62).

9. Compensateur synchrone statique série moyenne tension (1) selon l'une quelconque des revendications précédentes, dans lequel l'onduleur (40) est adapté pour générer une tension, pour définir l'orientation d'une circulation électrique entre les deux points de couplage (20A, 20B).

10. Compensateur synchrone statique série moyenne tension (1) selon l'une quelconque des revendications précédentes, **caractérisé par le fait que** le transformateur (20) comprend un noyau (24d) non bobiné de retour de flux en parallèle des noyaux bobinés (24a, 24b, 24c) pour conserver une inductance magnétisante homopolaire de l'ordre de 1/3 de l'inductance magnétisante équilibrée.

11. Ensemble (C) de réseau électrique (A, B) comprenant deux portions d'un même un réseau électrique (A, B) de distribution, par exemple deux départs (102, 104) d'un même poste (100), ou deux réseaux électriques (A, B) de distribution électrique, par exemple deux réseaux reliés à deux postes sources respectifs (100, 110), reliés par un compensateur synchrone statique série moyenne tension (1) selon l'une quelconque des revendications 1 à 10.

12. Procédé de commande d'un compensateur synchrone statique série moyenne tension (1) selon l'une quelconque des revendications 1 à 11, comprenant les étapes suivantes :
(a) réception d'un ordre de circulation d'un signal électrique d'un premier point de couplage (20A) vers un second point de couplage (20B) ;
(b) génération par l'onduleur (40) d'une basse tension inférieure à 1kV pour orienter la circulation du signal électrique conformément à l'ordre reçu ;
**caractérisé par le fait qu'**il comprend en outre l'étape suivante :
(c) lors de la détection d'un signal électrique indiquant un défaut provenant d'un premier réseau de distribution (A, B), protection du second réseau de distribution en bloquant l'onduleur (40) et entrainant si nécessaire le transformateur (20) dans un état de saturation maitrisée.

13. Procédé selon la revendication 12, dans lequel l'étape (c) comprend les étapes suivantes :
(c1) détection d'un courant de défaut ;
(c3) blocage de l'onduleur (40) et limitation du courant de défaut par le transformateur série (20) dans un état de saturation maîtrisée ;
(c4) ouverture d'un contacteur (60A, 60B) relié au réseau n'étant pas en défaut ;
(c5) transmission d'informations d'état et de détection du défaut à un organe de contrôle (80) du réseau en défaut.

14. Procédé selon la revendication 13, dans lequel l'étape (c) comprend en outre l'étape suivante : (c2) détermination du réseau à l'origine du défaut.

15. Procédé selon l'une des revendications 13 ou 14, dans lequel le circuit de dérivation (27) comprend un organe de coupure (28) mobile entre une position fermée dans laquelle le tertiaire (25) est court-circuité et une position ouverte dans laquelle un courant électrique peut circuler dans le tertiaire (25), et dans lequel l'étape (c3) comprend en outre le passage en position ouverte de l'organe de coupure (28).

## Patentansprüche

1. Statischer synchroner Mittelspannung-Serienkompensator (1), der zur elektrischen Verbindung von zwei elektrischen Stromverteilernetzen (A, B) oder zur Verbindung von zwei Abschnitten desselben elektrischen Stromverteilernetzes geeignet ist, umfassend einen Leitungstransformator (20) und einen Niederspannungs-Wechselrichter (40), wobei der Niederspannungs-Wechselrichter (40) mit dem Leitungstransformator (20) elektrisch verbunden ist, wobei der Leitungstransformator (20) zwei Anschlusspunkte (20A, 20B) aufweist, die jeweils geeignet sind, mit einem der zwei Stromnetzen (A, B) oder mit einem der zwei Abschnitte desselben elektrischen Stromverteilernetzes verbunden zu sein, und der Leitungstransformator (20) einen primären Magnetkreis (21) und einen sekundären Magnetkreis (22) umfasst, wobei der statische synchrone Mittelspannung-Serienkompensator (1) **dadurch gekennzeichnet ist, dass** der Transformator (20) einen Nebenkreis (27) umfasst, der den Primären (21) und den Sekundären (22) magnetisch verbindet, um zu erlauben, das Verhalten des sekundären Magnetkreises (22) vom Verhalten des primären Magnetkreises (21) bei Anwendung auf den primären Magnetkreis (21) der Spannung eines Netzes nach einer Blockierung über Dreiphasennetz des Wechselrichters (40) unabhängig zu machen.

2. Statischer synchroner Mittelspannung-Serienkompensator (1) nach Anspruch 1, wobei der Primäre (21) und der Sekundäre (22) jeweils mindestens eine Wicklung aufweisen, wobei die mindestens eine primäre Wicklung (21a, 21b, 21c) und die mindestens eine sekundäre Wicklung (22a, 22b, 22c) längs versetzt sind, so dass sie nicht konzentrisch sind.

3. Statischer synchroner Mittelspannung-Serienkompensator (1) nach einem der vorangehenden Ansprüche, wobei der Nebenkreis (27) einen tertiären Magnetkreis (25) umfasst.

4. Statischer synchroner Mittelspannung-Serienkompensator (1) nach Anspruch 3, wobei der Nebenkreis (27) einen Schutzschalter (28) umfasst, der zwischen einer geschlossenen Position, in welcher der tertiäre Magnetkreis (25) kurzgeschlossen ist, und einer geöffneten Position, in welcher ein elektrischer Strom im Tertiären (25) fließen kann, beweglich ist.

5. Statischer synchroner Mittelspannung-Serienkompensator (1) nach einem der vorangehenden Ansprüche, **dadurch gekennzeichnet, dass** der Transformator (20) geeignet ist, ausgehend von einer Spannung in der Größenordnung des Doppelten einer Nennspannung des Wechselrichters (40) und/oder ausgehend von einer Spannung in der Größenordnung von 1000 V eine kontrollierte Sättigung aufzuweisen.

6. Statischer synchroner Mittelspannung-Serienkompensator (1) nach einem der vorangehenden Ansprüche, **dadurch gekennzeichnet, dass** der Transformator (20) geeignet ist, im Zustand der kontrollierten Sättigung eine äquivalente kontrollierte gesättigte magnetisierende Induktivität (Lmag) für den primären Magnetkreis (21) aufzuweisen, die mindestens 1/20 größer als die nicht gesättigte magnetische Induktivität des Transformators und/oder größer als 100 mH ist.

7. Statischer synchroner Mittelspannung-Serienkompensator (1) nach einem der vorangehenden Ansprüche, wobei mindestens einer der Anschlusspunkte (20A, 20B) einen Kontaktgeber (60A, 60B) umfasst, der zum Trennen der zwei Stromnetze (A, B) oder der zwei Abschnitte desselben elektrischen Verteilernetzes bei einem Fehler in einem von ihnen geeignet ist und/oder zwei Kontaktgeber (60A, 60B) umfasst, die jeweils im Bereich der Anschlusspunkte platziert sind, die zum Trennen der zwei Stromnetze (A, B) bei einem Fehler in einem von ihnen und zum Isolieren des Kompensators geeignet sind.

8. Statischer synchroner Mittelspannung-Serienkompensator (1) nach einem der vorangehenden Ansprüche, **dadurch gekennzeichnet, dass** er einen Kontaktgeber zur parallelen Umgehung (62) umfasst.

9. Statischer synchroner Mittelspannung-Serienkompensator (1) nach einem der vorangehenden Ansprüche, wobei der Wechselrichter (40) zum Erzeugen einer Spannung geeignet ist, um die Ausrichtung eines Stromflusses zwischen den zwei Anschlusspunkten (20A, 20B) festzulegen.

10. Statischer synchroner Mittelspannung-Serienkompensator (1) nach einem der vorangehenden Ansprüche, **dadurch gekennzeichnet, dass** der Transformator (20) einen nicht gewickelten Stromrückführungskern (24d) parallel zu den gewickelten Kernen (24a, 24b, 24c) umfasst, um eine homopolare magnetisierende Induktivität in der Größenordnung von 1/3 der ausgewogenen magnetisierenden Induktivität beizubehalten.

11. Stromnetz- (A, B) Anordnung (C), umfassend zwei Abschnitte desselben elektrischen Stromverteilernetzes (A, B), beispielsweise zwei Abgänge (102, 104) von demselben Posten (100), oder zwei elektrische Stromverteilernetze (A, B), beispielsweise zwei Netze, die mit zwei jeweiligen Umspannposten (100, 110) verbunden sind, die durch einen statischen synchronen Mittelspannung-Serienkompensator (1) nach einem der Ansprüche 1 bis 10 verbunden sind.

12. Verfahren zur Steuerung eines statischen synchronen Mittelspannung-Serienkompensators (1) nach einem der Ansprüche 1 bis 11, das die folgenden Schritte umfasst:
(a) Empfangen eines Befehls für das Zirkulieren eines elektrischen Signals von einem ersten Anschlusspunkt (20A) zu einem zweiten Anschlusspunkt (20B) ;
(b) Erzeugen einer Niederspannung von unter 1 kV durch den Wechselrichter (40), um die Zirkulation des elektrischen Signals dem empfangenen Befehl entsprechend auszurichten;
**dadurch gekennzeichnet, dass** es ferner den folgenden Schritt umfasst:
(c) bei der Ermittlung eines elektrischen Signals, das einen Fehler angibt, der von einem ersten Verteilernetz (A, B) kommt, Schützen des zweiten Verteilernetzes durch Blockieren des Wechselrichters (40) und Überführen, sofern notwendig, des Transformators (20) in einen Zustand der kontrollierten Sättigung.

13. Verfahren nach Anspruch 12, wobei der Schritt (c) die folgenden Schritte umfasst:
(c1) Ermitteln eines Fehlerstroms;
(c3) Blockieren des Wechselrichters (40) und Begrenzen des Fehlerstroms durch den Reihentransformator (20) in einem Zustand der kontrollierten Sättigung;
(c4) Öffnen eines Kontaktgebers (60A, 60B), der mit dem Netz verbunden ist, das nicht fehlerhaft ist;
(c5) Übertragen von Zustands- und Fehlerermittlungsinformationen an ein Kontrollorgan (80) des fehlerhaften Netzes.

14. Verfahren nach Anspruch 13, wobei der Schritt (c) ferner den folgenden Schritt umfasst:
(c2) Bestimmen des Netzes, das den Fehler verursacht hat.

15. Verfahren nach einem der Ansprüche 13 oder 14, wobei der Nebenkreis (27) einen Schutzschalter (28) umfasst, der zwischen einer geschlossenen Position, in welcher der Tertiäre (25) kurzgeschlossen ist, und einer geöffneten Position, in welcher ein elektrischer Strom im Tertiären (25) fließen kann, beweglich ist und wobei der Schritt (c3) ferner den Wechsel des Schutzschalters (28) in die geöffnete Position umfasst.

## Claims

1. Medium-voltage static series synchronous compensator (1) adapted for electrically connecting two electrical distribution networks (A, B) or for connecting two portions of the same electrical distribution network , comprising a line transformer (20) and a low-voltage inverter (40), the low-voltage inverter (40) being electrically connected to the line transformer (20), the line transformer (20) having two coupling points (20A, 20B) each adapted to be connected to one of the two electrical networks (A, B) or to one of the two portions of a single electrical distribution network, and the line transformer (20) comprising a primary magnetic circuit (21) and a secondary magnetic circuit (22), the medium-voltage static series synchronous compensator (1) being **characterized in that** the transformer (20) comprises a bypass circuit (27) magnetically connecting the primary (21) and secondary (22) to enable the behavior of the secondary magnetic circuit (22) to be made independent of the behavior of the primary magnetic circuit (21) in the event of application to the primary magnetic circuit (21) of the voltage of a network after the inverter (40) has stalled on a three-phase network.

2. The medium-voltage static series synchronous compensator (1) as claimed in claim 1, in which the primary (21) and secondary (22) windings each have at least one winding, said at least one primary winding (21a, 21b, 21c) and said at least one secondary winding (22a, 22b, 22c) being longitudinally offset so as not to be concentric.

3. The medium-voltage static series synchronous compensator (1) according to any of the preceding claims, wherein the bypass circuit (27) comprises a tertiary magnetic circuit (25).

4. The medium-voltage static series synchronous compensator (1) as claimed in claim 3, wherein the bypass circuit (27) comprises a switch member (28) movable between a closed position in which the tertiary magnetic circuit (25) is short-circuited and an open position in which an electric current can flow through the tertiary (25).

5. The medium-voltage static series synchronous compensator (1) according to any one of the preceding claims, **characterized by** the fact that the transformer (20) is adapted to exhibit controlled saturation from a voltage of the order of twice a nominal voltage of the inverter (40) and/or from a voltage of the order of 1000V.

6. The medium-voltage static series synchronous compensator (1) according to any of the preceding claims, **characterized by** the fact that the transformer (20) is adapted to present in the controlled saturation state an equivalent controlled saturated magnetizing inductance (Lmag) for the primary magnetic circuit (21) at least greater than 1/20 of the unsaturated magnetic inductance of the transformer and/or greater than 100mH.

7. The medium-voltage static series synchronous compensator (1) according to any one of the preceding claims, wherein at least one of the coupling points (20A, 20B) comprises a contactor (60A, 60B) adapted to separate the two electrical networks (A, B) or the two portions of the same electrical distribution network in the event of a fault on one of them and/or comprises two contactors (60A, 60B) placed respectively at the coupling points, adapted to separate the two electrical networks (A, B) in the event of a fault on one of them and isolate the compensator.

8. The medium voltage static series synchronous compensator (1) according to any of the preceding claims, **characterized in that** it comprises a parallel bypass contactor (62).

9. The medium-voltage static series synchronous compensator (1) according to any of the preceding claims, wherein the inverter (40) is adapted to generate a voltage, to define the orientation of an electrical flow between the two coupling points (20A, 20B).

10. The medium-voltage static series synchronous compensator (1) according to any of the preceding claims, **characterized in that** the transformer (20) comprises an unwound flux feedback core (24d) in parallel with the wound cores (24a, 24b, 24c) to maintain a homopolar magnetizing inductance of the order of 1/3 of the balanced magnetizing inductance.

11. An electrical network (A, B) assembly (C) comprising two portions of the same electrical distribution network (A, B), for example two feeders (102, 104) of the same substation (100), or two electrical distribution networks (A, B), for example two networks connected to two respective source substations (100, 110), connected by a medium-voltage static series synchronous compensator (1) according to any one of claims 1 to 10.

12. A method of controlling a medium-voltage static series synchronous compensator (1) according to any one of claims 1 to 11, comprising the following steps:
(a) receiving a command to circulate an electrical signal from a first coupling point (20A) to a second coupling point (20B);
(b) generation by the inverter (40) of a low voltage of less than 1kV to direct the flow of the electrical signal in accordance with the order received;
**characterized in that** it further comprises the following step:
(c) on detection of an electrical signal indicating a fault originating from a first distribution network (A, B), protection of the second distribution network by blocking the inverter (40) and, if necessary, driving the transformer (20) into a state of controlled saturation.

13. A method according to claim 12, wherein step (c) comprises the following steps:
(c1) detecting a fault current;
(c3) blocking the inverter (40) and limiting the fault current by the series transformer (20) in a state of controlled saturation;
(c4) opening of a contactor (60A, 60B) connected to the network which is not faulty;
(c5) transmission of status and fault detection information to a control unit (80) of the faulted network.

14. A method according to claim 13, wherein step (c) further comprises the following step:
(c2) determining the network at the origin of the fault.

15. A method according to one of claims 13 or 14, wherein the branch circuit (27) comprises a shut-off member (28) movable between a closed position in which the tertiary (25) is short-circuited and an open position in which electric current can flow through the tertiary (25), and wherein step (c3) further comprises moving the shut-off member (28) to the open position.
